Europäisches Patentamt

European Patent Office

Office européen des brevets

(19)

(11) **EP 1 468 537 B1**

(12) **EUROPÄISCHE PATENTSCHRIFT**

(45) Veröffentlichungstag und Bekanntmachung des Hinweises auf die Patenterteilung:
**13.07.2005 Patentblatt 2005/28**

(21) Anmeldenummer: 03730158.7

(22) Anmeldetag: **10.06.2003**

(51) Int Cl.$^7$: **H04L 27/26**, H04L 25/02

(86) Internationale Anmeldenummer:
**PCT/EP2003/006079**

(87) Internationale Veröffentlichungsnummer:
**WO 2003/105432 (18.12.2003 Gazette 2003/51)**

(54) **VERFAHREN UND VORRICHTUNG ZUR DURCHFÜHRUNG EINER KANALSCHÄTZUNG IN GEGENWART VON PHASENSPRÜNGEN**

METHOD AND DEVICE FOR CARRYING OUT A CHANNEL ESTIMATION IN THE PRESENCE OF PHASE SHIFTS

PROCEDE ET DISPOSITIF POUR EFFECTUER UNE ESTIMATION DE CANAL EN LA PRESENCE DE CHANGEMENTS DE PHASE

(84) Benannte Vertragsstaaten:
**AT BE BG CH CY CZ DE DK EE ES FI FR GB GR HU IE IT LI LU MC NL PT RO SE SI SK TR**

(30) Priorität: **10.06.2002 DE 10225663**

(43) Veröffentlichungstag der Anmeldung:
**20.10.2004 Patentblatt 2004/43**

(73) Patentinhaber: **FRAUNHOFER-GESELLSCHAFT ZUR FÖRDERUNG DER ANGEWANDTEN FORSCHUNG E.V.**
**80686 München (DE)**

(72) Erfinder:
• **BARTSCH, Carsten**
  **92345 Dietfurt (DE)**
• **KILIAN, Gerd**
  **91056 Erlangen (DE)**

(74) Vertreter: **Schoppe, Fritz, Dipl.-Ing.**
**Patentanwälte**
**Schoppe, Zimmermann, Stöckeler & Zinkler**
**Postfach 246**
**82043 Pullach bei München (DE)**

(56) Entgegenhaltungen:
**EP-A- 0 838 928**           **EP-A- 1 178 642**
**WO-A-00/24168**

**Beschreibung**

Die vorliegende Erfindung bezieht sich auf Empfänger und insbesondere auf Empfänger, wie z.B. digitale Radioempfänger oder Modems, bei Übertragungssystemen, bei denen Symbole mit einer Wiederholrate übertragen werden, die sich spektral aus mehreren Unterträgern zusammensetzen, von denen auf vorbestimmte Unterträger bekannte Unterträgerwerte aufmoduliert sind, um eine Kanalschätzung durchzuführen. Ein solches System ist aus Patentanmeldung EP 0 838 928 bekannt.

Im Fall der mobilen Datenübertragung erreicht das die Daten übertragende Signal den Empfänger in der Regel über mehrere Ausbreitungswege. Dasselbe Signal erreicht den Empfänger folglich mehrere Male mit unterschiedlichen Pfadlaufzeiten. Bei Übertragung von hohen Datenraten sind die Pfadlaufzeitunterschiede bzw. die Echolaufzeiten oftmals nicht mehr deutlich kleiner als die Symboldauer. Echos führen dann zu Überlagerungen mit den Nachbarsymbolen bzw. zwischen zwei unmittelbar aufeinanderfolgenden Symbolen, was als Intersymbolinterferenz (ISI) bezeichnet wird. Diese Intersymbolinterferenz führt wiederum zu Fehlern beim Empfang der zu übertragenden Daten. Mehrträgerverfahren, wie z.B. OFDM (orthogonal frequency division multiplexing = orthogonales Frequenzeinteilungsmultiplexverfahren) und DMT (discrete multitone = diskretes Mehrtonverfahren), lösen dieses Problem dadurch, daß die Symboldauer dadurch verlängert wird, daß der zu übertragende Datenstrom parallelisiert und auf viele Unterträger moduliert wird. Jeder dieser Unterträger transportiert dann nur noch einen kleinen Bruchteil der gesamten Datenrate, wodurch die Symboldauer sehr groß werden kann, insbesondere groß gegen die typischen Echolaufzeiten.

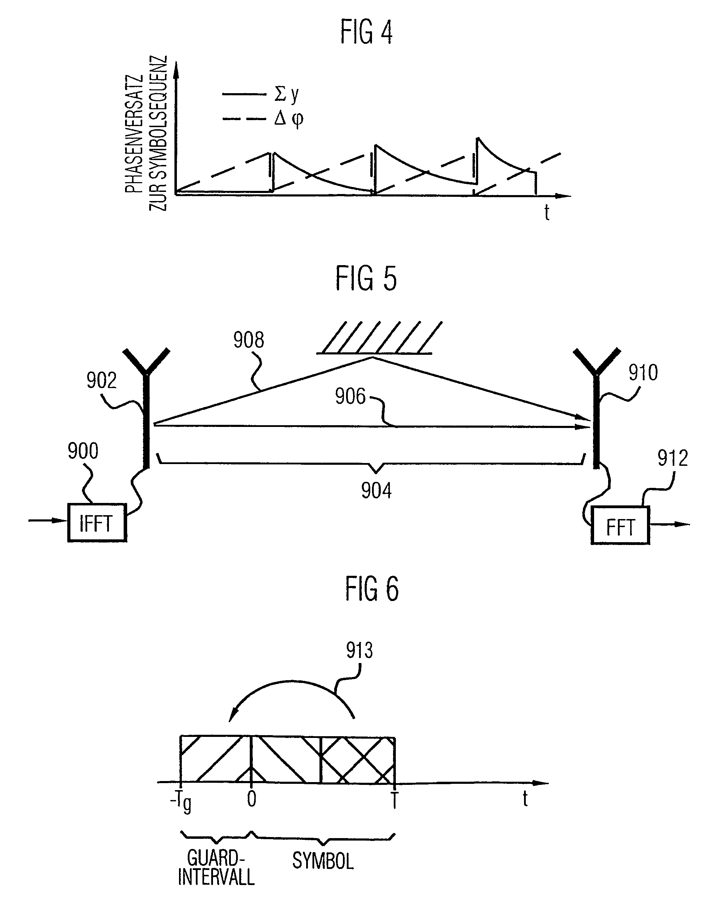

Die grundsätzliche Funktionsweise der Mehrträgerübertragungssysteme ist am Beispiel einer OFDM-Systems in Fig. 5 veranschaulicht. Zu übertragende digitale Daten werden sendeseitig in einem Sender 900 zunächst zu einem Block von n (n $\in \mathbb{N}$ ) Werten parallelisiert, woraufhin dieser Block einer Transformation von einer spektralen Darstellung in einen Zeitbereich, nämlich einer inversen schnellen Fourier-Transformation (IFFT), unterzogen und anschließend serialisiert und auf eine Trägerfrequenz aufmoduliert wird, um anschließend über eine Antenne 902 abgestrahlt zu werden. Anschließend durchlaufen die zu übertragenden Daten eine Übertragungsstrecke 904, die aus mehreren Mehrwegpfaden 906 und 908 besteht. Die Gründe für die Mehrwegausbreitung sind vielfältig. Beispiele für Ursachen von Mehrwegausbreitung sind Reflexionen an Häuserwänden, Reflexionen an Ionosphärenschichten, und dergleichen. Aufgrund der Mehrwegeausbreitung überlagert sich das abgestrahlte Symbol mehrmals empfangsseitig mit unterschiedlichen Echolaufzeiten, weshalb das gesendete Signal von dem empfangenen Signal gemäß einer der Übertragungsstrecke entsprechenden Impulsantwort und die Werte der Unterträger des gesendeten Symbols von denjenigen des empfangenen Symbols gemäß einer Übertragungsfunktion abweichen, was empfangsseitig wieder korrigiert wird, wie es im folgenden beschrieben wird. Um die auf die Unterträger des Symbols aufmodulierten, zu übertragenden Daten zu erhalten, wird das überlagerte Empfangssignal nach Empfang an einer Antenne 910 in einem Empfänger 912 zunächst demoduliert und abgetastet, woraufhin der sich ergebende Block von komplexen Zeitwerten parallelisiert, einer geeigneten Transformation in eine spektrale Darstellung, nämlich einer schnellen Fourier-Transformation, unterzogen wird, um einen Block von komplexen Werten der Unterträger zu erhalten, der gegebenenfalls wieder serialisiert wird. Da pro Symbol n Unterträger übertragen werden, kann bei gleichbleibender Datenübertragungsrate die Symboldauer erhöht werden.

Die zu übertragenden Daten werden sendeseitig in Informationspaketen bzw. Symbolen der Dauer T übertragen, wie es in Fig. 6 dargestellt ist. Der Block von Datenwerten, der in dem Sender 900 einer inversen Fourier-Transformation unterzogen wird, wird vermittels der Transformation auf die Unterträger des Symbols aufmoduliert. Die inverse Fourier-Transformation ergibt einen Block von ebenso vielen komplexen Zeitwerten, die binnen einer Zeitdauer T einer Trägerfrequenz aufmoduliert werden, um ein Symbol zu ergeben. Empfangsseitig überlagern sich die Symbole mit unterschiedlichen Echolaufzeiten, die von den unterschiedlichen Laufzeiten der Mehrwegpfade 906 und 908 resultieren. Damit Symbole, die auf langsameren Mehrwegpfaden 908 übertragen wurden, nicht das darauffolgende Symbol stören, liegt zwischen aufeinanderfolgenden Symbolen ein sogenanntes Guardintervall der Länge $T_G$. Bei Konzeption des Systems wird die Guardintervalldauer $T_G$ derart ausgelegt, daß keine ISI auftritt. Während des Guardintervalles wird das Ende des darauffolgenden Symbols periodisch wiederholt und somit das Symbol auf eine effektive Zeitdauer von $T + T_G$ verlängert, wie es durch einen Pfeil 913 angedeutet ist. Die periodische Fortsetzung des Symbols vorweg im Guardintervall dient dazu, daß die um Echolaufzeiten zeitversetzt ankommenden Symbole mit dem zuerst ankommenden Symbol vollständig und nicht nur teilweise am Empfänger interferieren.

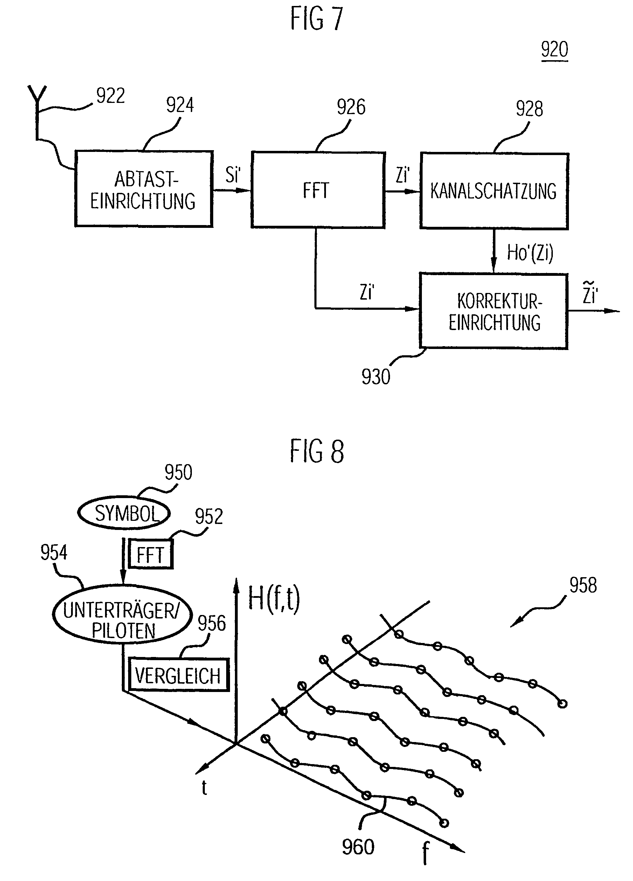

Eine etwas genauere Darstellung des Aufbaus des Empfängers ist in Fig. 7 gezeigt. Wie es zu sehen ist umfaßt der Empfänger, der allgemein mit 920 angezeigt ist, eine Antenne 922, eine Abtasteinrichtung 924, eine Transformationseinrichtung 926, eine Kanalschätzungseinrichtung 928 und eine Korrektureinrichtung 930. Die Antenne 922 empfängt das Empfangssignal, das das Symbol und das vorhergehende Guardintervall umfaßt. Nach einer Demodulation von der Trägerfrequenz durch einen nicht dargestellten Mischer, wird das Symbol durch die Abtasteinrichtung 924 abgetastet. Ein resultierender Block von komplexen Empfangswerten $s'_i$ wird der Transformationseinrichtung 926 zugeführt, die nach Durchführung der Fourier-Transformation einen Block von unkorrigierten komplexen Unterträgerwerten ausgibt. Aufgrund der Mehrwegeausbreitung und anderer Störungen, wie z.B.

Rauschen, weichen die unkorrigierten Unterträgerwerte $z'_i$ von den gesendeten Unterträgerwerten bzw. den zu übertragenden Daten $z_i$ ab. Das an der Antenne 922 empfangene Signal $s'(t)$ entspricht aufgrund der Mehrwegeausbreitung einer Faltung des gesendeten Signalverlaufes $s(t)$ mit der Impulsantwort $h(t)$ der Übertragungsstrecke, die, allgemein ausgedrückt, jeder Echolaufzeit eine Intensität zuordnet. Folglich gilt:

$$s'(t) = s(t) \times h(t) \tag{Gl. 1}$$

Dementsprechend gilt für die unkorrigierten Unterträgerwerte $z'_i$:

$$z'_i = z_i H(f_i) + n \tag{Gl. 2}$$

wobei $z_i$ die sendeseitig zu übertragenden Daten, $H$ die Übertragungsfunktion, d.h. die Fourier-Transformierte der Impulsantwort $h$, $f_i$ die Unterträgerfrequenz des Unterträgers $i$ und $n$ weißes Rauschen ist, das durch Kanalstörungen hervorgerufen wird.

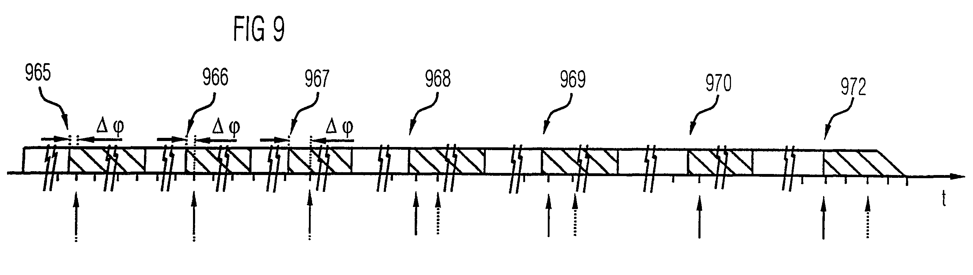

Ziel der Kanalschätzung 928 ist es nun, die Übertragungsfunktion $H(f)$ so gut wie möglich zu schätzen, um die unkorrigierten Unterträgerwerte $z'_i$ zu korrigieren, um korrigierte Unterträgerwerte $\tilde{z}'_i$ zu erhalten. Die Kanalschät-zung durch die Kanalschätzungseinrichtung 928 wird Bezug nehmend auf Fig. 8 näher erläutert. Die Korrektureinrichtung 930 führt die Korrektur durch Dividieren der unkorrigierten Unterträgerwerte $z'_i$ durch die geschätzte Übertra-gungsfunktion $H'(f_i)$ durch:

$$\tilde{z}'_i = z'_i \cdot \frac{1}{H'(f_i)} \tag{Gl. 3}$$

Die Übertragungsfunktion $H(f)$ ist zeitlich variabel, da beispielsweise aufgrund einer Relativbewegung von Empfängers zu Sender die Empfangssituation ständigen Änderungen unterworfen ist. Die sich zeitlich ändernde Übertragungsfunktion $H(f,t)$ wird durch die Kanalschätzungseinrichtung 928 anhand von sogenannten Piloten geschätzt. Piloten sind spezielle Unterträgerwerte, die sendeseitig gemäß einem speziellen Protokoll in vorbestimmte Unterträger aufmoduliert werden und empfangsseitig aufgrund des Protokolls bekannt sind. Pro Symbol werden nur einige der Unterträger zur Übertragung der Piloten verwendet, um die anderen Unterträger (aus technischen Gründen eventuell nicht alle anderen) zur Datenübertragung verwenden zu können. Von Symbol zu Symbol werden die Unterträger zur Übertragung der Piloten variiert, um so die sich zeitlich ändernde Kanalübertragungsfunktion $H(f,t)$ in Zeit- und Frequenzrichtung abzutasten.

Fig. 8 zeigt eine detailliertere Darstellung der Kanalschätzüng, die durch die Kanalschätzungseinrichtung 928 von Fig. 7 durchgeführt wird. Die aus einem Symbol 950 nach Durchführung der Fourier-Transformation 952 erhaltenen unkorrigierten Unterträgerwerte $z'_I$ der Unterträger I, auf denen die Piloten übertragen werden, 954, werden einem Vergleich 956 mit den bekannten Unterträgerwerten der Piloten unterzogen, indem die unkorrigierten Unterträgerwerte $z'_I$ durch die jeweils bekannten Unterträgerwerte der Piloten $z_I$ geteilt werden:

$$\frac{z'_I}{z_I} = H'(f_I(t_0), t_0) \tag{Gl. 4}$$

wobei $f_I$ die Frequenz des Unterträgers I und $t_0$ die augenblickliche Zeit des Symbols ist. Auf diese Weise werden viele Abtastwerte der Kanalübertragungsfunktion $H$ an den Frequenzen $f_I(t_i)$ und Zeitpunkten $t_i$ erhalten, wobei $t_i$ die Zeit-punkte der letzten Symbole sind. In Fig. 8 sind die Abtastwerte der Kanalübertragungsfunktion $H$ mit Kreisen dargestellt. Diese Werte werden auch Stützstellenwerte genannt. Um die Werte der Kanalübertragungsfunktion zu dem augen-blicklichen Zeitpunkt $t_0$ auch an denjenigen Frequenzen zu schätzen, die zur Datenübertragung verwendet wurden, wird die Kanalübertragungsfunktion $H$ entweder separat in Zeit- und Frequenzrichtung oder zweidimensional interpoliert. Die sich ergebende geschätzte interpolierte Kanalübertragungsfunktion ist in Fig. 8 allgemein mit 958 angezeigt, wobei die Interpolation derselben durch die entlang der Frequenz verlaufenden Linien veranschaulicht werden soll. Auf diese Weise wird eine vollständige Schätzung $H'(f,t_0)$ der aktuellen Kanalübertragungsfunktion $H$ erhalten, die in Fig. 8 mit 960 angezeigt ist.

Die Interpolation der Kanalübertragungsfunktion $H$ basiert auf einer Tiefpaßfilterung in sowohl Zeit- als auch Frequenzrichtung. Die Kanalschätzungsfilter fuhren also neben der Interpolation zwischen den Stützwerten, um die Verzerrungen durch den Kanal für jeden Unterträger zu jeder Zeit zu bestimmen, auch eine Rauschunterdrückung bzw. eine Unterdrückung von Störungen der Piloten durch. Die Grenzfrequenzen der Kanalschätzungsfilter ergeben sich aus den maximal zu erwartenden Änderungsgeschwindigkeiten bzw. den maximalen Frequenzanteilen der Kanalübertragungsfunktion sowohl in Zeit- als auch in Frequenzrichtung. Je schneller sich der Kanal zeitlich ändert, desto größer muß die Grenzfrequenz für die Tiefpaßfilterung in Zeitrichtung sein. Die Frequenzanteile in Frequenzrichtung müssen um so größer sein, je weiter einzelne Übertragungswege zeitlich auseinander liegen, d.h. je größer die Echolaufzeiten bzw. die Pfadlaufzeitunterschiede. Dies ergibt sich aus der Überlegung, daß größere Echolaufzeiten die Impulsantwort h(t) zu größeren Zeiten hin ausdehnt, welche wiederum das Spektrum der zeitvariablen Kanalübertragungsfunktion H(f,t) ist und somit ihre Frequenzanteile in Frequenzrichtung angibt. Die Dichte von Auslöschungen und konstruktiver Überlagerung innerhalb der Kanalübertragungsfunktion H aufgrund der Laufzeitunterschiede entspricht folglich dem Kehrwert der maximalen Pfadverzögerung $T_{max}$ der Übertragungsstrecke. Das bedeutet, daß bei weit auseinanderliegenden Pfaden die Frequenzinterpolation bei einer höheren Grenzfrequenz in Frequenzrichtung durchgeführt werden muß, um die hohen Frequenzanteile der Kanalübertragungsfunktionen in Frequenzrichtung berücksichtigen zu können. Andererseits wird die Tiefpaßfilterung zur Rauschunterdrückung durchgeführt und sollte deshalb mit möglichst niedrigen Grenzfrequenzen durchgeführt werden, um möglichst viel Störung zu unterdrücken.

Ein Problem besteht nun darin, daß Änderungen der Phase bzw. Des Zeitversatzes zwischen dem Block von Abtastwerten und den ankommenden Symbolen negative Auswirkungen auf die zeitliche Interpolation der Kanalübertragungsfunktion haben. Wie bereits erwähnt, werden die Symbole sendeseitig in einer vorbestimmten Wiederholrate ausgestrahlt. Trotz Mehrfachüberlagerung dieser Symbole kann der Empfänger empfangsseitig beispielsweise mittels Autokorrelation des Empfangssignal unter Ausnutzung der Selbstähnlichkeit des Guardintervalls mit dem Ende des Symbols die einzelnen Zeitpunkte des Beginns der Symbole und ihrer Guardintervalle ermitteln. Hieraus wird eine gemittelter Wert für die sendeseitig verwendete Widerholrate berechnet, der als Grundlage für die Ermittlung der idealen Abtastzeitpunkte für die Abtastblöcke verwendet wird. Idealerweise tastet der Empfänger das Symbol dann ab, wenn die Empfangsenergie am größten ist, was beispielsweise unmittelbar bei Beginn des Symbols, d.h. unmittelbar nach dem Guardintervall der Fall ist. Die feste Phase zwischen Abtastung des Blocks von Abtastwerten und dem Beginn des zuerst ankommenden Symbols bzw. die zeitliche Synchronisation kann aus verschiedenen Gründen gestört werden. Exemplarische Einflüsse umfassen beispielsweise die Änderung des Kanals aufgrund einer Bewegung des Empfängers, wie z.B. einer Abschattung des kürzesten Mehrwegpfades, oder eine Abtastabweichung eines Analog/ Digital-Wandlers in der Abtasteinrichtung des Empfängers von einer Sollabtastrate, die der Anzahl der Unterträger bzw. der Länge des Symbols oder der Transformation (FFT, IFFT) oder Rücktransformation N dividiert durch die Symboldauer T entspricht. Kanaländerungen, wie z.B. der Wegfall von Mehrwegpfaden, wird zunächst durch die Grenzfrequenz der Zeitinterpolation der Kanalschätzung Rechnung getragen, die ausgelegt ist, um die mit den Änderungen der Empfangssituation verbundenen Übertragungsfunktionsänderungen in Zeitrichtung berücksichtigen zu können. Allerdings können die Kanaländerungen auch zu einer kurzeitigen abrupten Änderung der empfangsseitig ermittelten Wiederholrate über einen oder mehrere Abtastwerte führen, was wiederum Phasensprünge ergibt. Die Abweichung der Abtastrate des Empfängers von der Sollabtastrate führt ebenfalls, wenngleich gering, zu Phasensprüngen. Diese Phasensprünge haben eine sprunghafte Verschiebung der Impulsantwort h(t) um den zeitlichen Abstand zweier Abtastwerte $T_s$, d.h. um ein Abtastintervall $T_s$, zur Folge, was wiederum eine sprunghafte Änderung der Kanalübertragungsfunktion H(f) zur Folge hat, da ja die Impulsantwort h das Spektrum der Kanalübertragungsfunktion H ist. Diese sprunghafte Änderung der zeitlich variablen Kanalübertragungsfunktion H(f,t) in der Zeit bewirkt eine fehlerhafte Interpolation in der Zeit der Kanalübertragungsfunktion bei der Kanalschätzung.

Zur Verdeutlichung des Zustandekommens von Phasensprüngen aufgrund einer Abweichung der Abtastrate des Empfängers von einer Sollabtastrate ist in Fig. 9 ein exemplarischer Zeitausschnitt mit mehreren aufeinanderfolgenden Symbolen gezeigt. Entlang der Zeitachse t sind Guardintervalle mit nicht ausgefüllten Rechtecken und dazwischen die Symbole mit schraffierten Rechtecken angedeutet. Die Skalierung entlang der Zeitachse zeigt die Abtastzeitpunkte bei der empfangsseitigen Abtastung des Empfangssignals mit der Abtastrate $f_s$ und den Abtastintervallen $T_s$ zwischen zwei aufeinanderfolgenden Abtastzeitpunkten. Die aufeinanderfolgenden Guardintervalle mit zugehörigem Symbol sind mit 965, 966, 967, 968, 969, 970 und 972 angezeigt und zeitlich äquidistant mit der empfangsseitig ermittelten Widerholrate $f_W$ angeordnet. Die dargestellte zeitliche Anordnung der Symbole entspricht also nicht exakt den Ankunftszeiten der Symbole, sondern stellte eine Schätzung derselben anhand der mittlere Widerholrate $f_W$ dar. Außerdem sind in Fig. 9 mit vertikalen durchgehend gezeichneten Pfeilen die Abtastzeitpunkte der Blöcke von Abtastwerten der Symbole angezeigt, d.h. die Abtastzeitpunkte des jeweils ersten Abtastwertes der Blöcke. Die Abtastzeitpunkte liegen exemplarisch an dem erstmöglichen Abtastzeitpunkt nach dem optimalen Abtastzeitpunkt, nämlich dem Ende des Guardintervalls und dem Beginn des Symbols.

Wie es zu sehen ist, nimmt die Phase bzw. der Zeitversatz $\Delta\varphi$ zwischen dem Abtastzeitpunkt des ersten Abtastwertes des Blocks von Abtastwerten relativ zu dem aus der empfangsseitig ermittelten Wiederholrate berechneten Anfangszeitpunkten des Symbols bei den ersten drei Symbolen 965-967 zu. Bei dem vierten Symbol 968 ändert

sich die Phase $\Delta\varphi$ zwischen Symbol und Abtastbeginn des Abtastblockes sprunghaft auf nahezu 0. Dieser Sprung wiederholt sich zwischen den Symbolen 970 und 972. Im vorliegenden Beispiel weicht die Abtastrate des Empfängers folglich um etwa 1/3T von der optimalen bzw. Sollabtastrate N/T ab.

In Fig. 9 sind mit gestrichelten vertikalen Pfeilen diejenigen Abtastzeitpunkte der Abtastwertblöcke gezeigt, wie sie sich bei konstanter Anzahl von Abtastintervallen zwischen den Abtastzeitpunkten der Abtastwertblöcke ergeben würde. Wie es zu sehen ist würde sich der Zeitversatz bzw. die Phase zwischen Blockabtastung und Symbol sprunghaft akkumulieren und unendlich anwachsen, was wiederum, wie nachfolgend erläutert, negative Auswirkungen auf die Frequenzinterpolation der Kanalschätzung hat.

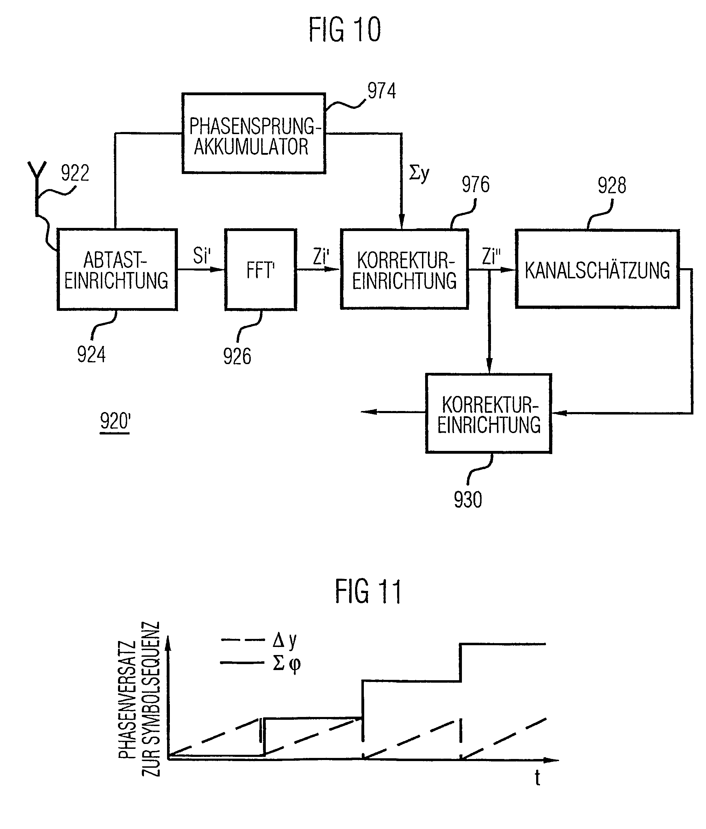

Ein Empfänger mit einer möglichen Vorkehrung gegen die negativen Auswirkungen von Phasensprüngen auf die Kanalschätzung, von welchem die vorliegende Erfindung ausgeht, ist in Fig. 10 gezeigt. Neben den in Fig. 7 gezeigten und beschriebenen Einheiten, die in Fig. 10 mit demselben Bezugszeichen versehen sind und zur Vermeidung von Wiederholungen nicht noch mal beschrieben werden, umfaßt der Empfänger von Fig. 10, der allgemein mit 920' angezeigt ist, einen Phasensprungakkumulator 974 und eine Korrektureinrichtung 976. Der Phasensprungakkumulator 974 detektiert auf der Grundlage der beispielsweise über Autokorrelation des Empfangssignals ermittelten Wiederholrate der Symbole Phasensprünge bei der Abtastung durch die Abtasteinrichtung 924. Der Phasensprungakkumulator 974 summiert die Phasensprünge durch die Abtasteinrichtung 924 auf und gibt Anzahl akkumulierter Phasensprunge $N_{Phasensprünge}$ an die Korrektureinrichtung 976 aus. Die Korrektureinrichtung 976 erhält die unkorrigierten Unterträgerwerte $z'_i$ von der Transformationseinrichtung 926 und unterzieht dieselben einer Phasendrehung, um die Phasensprünge durch die Abtastung virtuell rückgängig zu machen. Die Phase jedes Unterträgerwertes wird deshalb folgendermaßen korrigiert:

$$z''_i = z'_i \cdot e^{j \cdot \Sigma\varphi \cdot i}, \qquad\qquad (Gl.\ 5)$$

wobei

$$\Sigma\varphi = \frac{2\pi}{N}\ N_{Phasensprunge},$$

wobei N die Anzahl von Unterträgerwerten und $N_{Phasensprünge}$ die akkumulierte Summe von Phasensprüngen unter Berücksichtigung der Richtung der Phasensprünge ist. Die Korrektureinrichtung 976 erzeugt somit Unterträgerwerte $z''_i$, welche virtuell einer Abtastung der Symbole mit einer Wiederholrate entsprechen, die ein Vielfaches der empfangsinternen Abtastrate entspricht, wobei diese Zeitpunkte in Fig. 9 mit gestrichelten Pfeilen angezeigt sind.

In Fig. 11 ist zur Verdeutlichung des Effektes der Phasensprungakkumulation von Fig. 10 in einem Graphen über die Zeit die akkumulierte Phasenkorrektursumme $\Sigma\varphi$ und der tatsächliche Phasenversatz der Symbolabtastung $\Delta\varphi$ dargestellt. Fig. 11 geht hierbei exemplarisch von einer konstanten aber von einer Sollabtastrate abweichenden Abtastrate des empfangsseitigen A/D-Wandlers aus. Wie es zu sehen ist, nimmt der Betrag der akkumulierten Phasenkorrektur $\Sigma\varphi$ zunehmend zu, während die tatsächliche Phasenabtastweichung nur an den Zeitpunkten springt, bei denen die Abtastungszeitpunkte zwischen zwei Abtastblöcken sprunghaft um eine Abtastzeitdauer $T_s$ steigt oder fällt, wie es aus Fig. 9 ersichtlich ist. Insgesamt heben die Sprünge der Phasenkorrektur alle bisher stattgefundenen Phasensprünge bei der Abtastung auf, so als ob keine stattgefunden hätten. Die korrigierten Unterträgerwerte $z''_i$ von der Korrektureinrichtung 976 werden der Kanalschätzungseinrichtung 928 und der Korrektureinrichtung 930 zugeführt, die zusammen die Trägerwerte anhand einer geschätzten Kanalübertragungsfunktion H' korrigieren, wie es im vorhergehenden beschrieben wurde.

Ein Problem bei der im vorhergehenden beschriebenen möglichen Lösung des Problems der Auswirkung der Phasensprünge auf die Zweitinterpolation bei der Kanalschätzung besteht nun darin, daß zwar aufgrund der akkumulierten Phasenkorrektur $\Sigma\varphi$ zeitlich keine Phasensprünge in den Stützstellen der Kanalübertragungsfunktion mehr auftreten, daß aber aufgrund der Phasendrehung eine zunehmende Verschiebung der Impulsantwort stattfindet, da ja die Phasendrehungskorrektur, wie Fig. 9 entnehmbar, den Abtastzeitpunkt des Abtastblocks virtuell zunehmend mehr von dem optimalen Abtastzeitpunkt, der aus der Wiederholrate ermittelt wird, entfernt. Dies führt zu einer Veränderung und auf Dauer Erhöhung der Frequenzanteile der Übertragungsfunktion. Obwohl die Interpolationen in Zeitrichtung bei der Kanalschätzung folglich nicht durch die Phasensprünge gestört wird, ist nun die Interpolation in Frequenzrichtung aufgrund höherer Änderungsraten der Übertragungsfunktion H(f,t) in Frequenzrichtung mit dem Kanalschätzungsfilter nicht mehr zu bewältigen oder führt zumindest zu vermehrter Störung.

Die obigen Probleme wären freilich lösbar durch Einsatz von teureren A/D-Wandlern bei der Abtastung der Symbole bei den Empfängern mit hochgenauen Abtastraten. Diese hohen Kosten sind jedoch häufig unerwünscht. Zudem könnten aufwendigere anpaßbare komplexe Interpolationsfilter für die Kanalschätzungsinterpolation in Frequenzrichtung verwendet werden, was jedoch ebenfalls Aufwand und Kosten erhöht. Es besteht folglich ein Bedarf nach einem Empfangsschema, welches eine zufriedenstellende Kanalschätzung unter geringem Aufwand ermöglicht.

Die Aufgabe der vorliegenden Erfindung besteht folglich darin, ein Verfahren und eine Vorrichtung zur Durchführung einer Kanalschätzung zu schaffen, die einerseits eine Kanalschätzung liefern, die nicht auf Phasensprünge bei der Abtastung der Symbole anfällig ist, und trotzdem unaufwendig ausführbar ist.

Diese Aufgabe wird durch eine Vorrichtung gemäß Anspruch 1 und ein Verfahren gemäß Anspruch 7 gelöst.

Eine erfindungsgemäße Vorrichtung zur Durchführung einer Kanalschätzung eines Kanals, auf dem Symbole mit einer Wiederholrate übertragen werden, die sich spektral aus mehreren Unterträgern zusammensetzen, von denen auf vorbestimmte Unterträger bekannte Unterträgerwerte aufmoduliert sind, umfaßt eine Einrichtung zum Abtasten eines ersten Symbols und eines darauffolgenden zweiten Symbols basierend auf einer ersten internen Abtastrate, um einen ersten Block von Abtastwerten für das erste Symbol und einen zweiten Block von Abtastwerten für das zweite Symbol zu erhalten, wobei der erste Block einen ersten Phasenversatz und der zweite Block einen zweiten Phasenversatz aufweist, eine Einrichtung zum, falls zwischen dem ersten Phasenversatz und dem zweiten Phasenversatz ein Phasensprung in Höhe von etwa einem oder mehreren der internen Abtastrate entsprechenden Abtastintervallen besteht, Kompensieren des Phasensprungs durch Verarbeiten der Abtastrate des zweiten Symbols, derart, daß Phasen der Unterträger des zweiten Symbols um einen mit der Frequenz der Unterträger steigenden Betrag geändert werden, wobei die Steigerung von der zu kompensierenden Phasenänderung abhängt, wodurch phasenkompensierte Unterträgerwerte erhalten werden, und eine Einrichtung zum Vergleichen der bekannten Unterträgerwerte mit entsprechenden phasenkompensierten Unterträgerwerten, um Stutzstellenwerte für die aktuelle geschätzte Übertragungsfunktion zu erhalten. Weiterhin sind eine Einrichtung zum Durchführen einer Interpolation über Schnittstellenwerte vorhergehender und der aktuellen geschätzten Übertragungsfunktion, um Interpolationswerte fur die aktuelle geschätzte Übertragungsfunktion zu erhalten, eine Einrichtung zum Verändern von Phasen der Stützstellenwerte und Interpolationswerte der aktuellen geschätzten Kanalübertragungsfunktion um einen mit der Frequenz der Unterträger steigenden Betrag, wobei die Steigerung dieselbe ist wie bei der Kompensation des Phasensprungs, wobei die Änderung jedoch in umgekehrter Richtung zu der Änderung bei der Kompensation des Phasensprungs stattfindet, um phasenkompensierte Kanalübertragungsfunktionswerte zu erhalten, und eine Einrichtung zum Tiefpaßfiltern der phasenkompensierten Kanalübertragungsfunktionswerte, um eine Kanalschätzung des Kanals zu erhalten, vorgesehen.

Der vorliegenden Erfindung liegt die Erkenntnis zugrunde, daß die bisherigen Probleme bei der Kanalschätzung, die einerseits durch sprunghafte Phasensprünge bei der Abtastung und andererseits durch eine zunehmende Phasendrehung bzw. virtuelle Verschiebung des Abtastzeitpunkts des Blocks von Abtastwerten und damit der Impulsantwort in dem Fall der Korrektur der Phasensprünge bedingt ist, dadurch gelöst werden kann, daß die Kanalschätzung separat in Zeit und Frequenz durchgeführt wird, wobei die Zeitinterpolation bezüglich der phasenkorrigierten Unterträgerwerte bzw. der zeitlich virtuell verschobenen Abtastwerte durchgeführt wird, während die Frequenzinterpolation der Kanalschätzung bezüglich der abgetasteten Werte mit Phasensprung bei der Abtastung durchgeführt wird. Die Frequenzinterpolation wird deshalb nicht durch eine zunehmende Verschiebung der Impulsantwort und damit Erhöhung der Frequenzen in der Übertragungsfunktion gestört. Folglich reicht zur Frequenzinterpolation ein reellwertiges Filter aus, und es muß kein komplexes Filter zur Frequenzinterpolation verwendet werden, das der Verschiebung der Impulsantwort durch eine ständig angepaßte asymmetrische Durchlaßfunktion Rechnung trägt.

Bevorzugte Ausgestaltungen der vorliegenden Erfindung gehen aus den abhängigen Ansprüchen hervor.

Bevorzugte Ausführungsbeispiele der vorliegenden Erfindung werden nachfolgend Bezug nehmend auf die beiliegenden Zeichnungen näher erläutert. Es zeigen:

Fig. 1    ein Blockdiagramm eines Empfängers gemäß einem Ausführungsbeispiel der vorliegenden Erfindung;

Fig. 2    eine schematische Darstellung der Anordnung von Piloten in den Unterträgern aufeinanderfolgender Symbole;

Fig. 3    ein Blockschaltbild eines Phasensprungakkumulators mit Regelung gemäß einem Ausführungsbeispiel der vorliegenden Erfindung;

Fig. 4    ein Graph eines exemplarischen Phasenversatzes zur Symbolsequenz zur Verdeutlichung der Funktionsweise des Phasenakkumulators von Fig. 3;

Fig. 5    eine Prinzipdarstellung zur Veranschaulichung von Mehrträgersystemen;

Fig. 6    ein schematisches Diagramm zur Veranschaulichung des Verhältnisses von Guardintervall zu Symbol;

Fig. 7    ein schematisches Blockdiagramm eines herkömmlichen Empfängers;

Fig. 8       ein schematisches Diagramm zur Veranschaulichung einer Kanalschätzung;

Fig. 9       ein schematisches Diagramm zur Veranschaulichung der durch eine Abtastfehlrate bewirkten Phasensprünge;

Fig. 10     ein schematisches Diagramm eines Empfängers mit einer Phasenakkumulation als mögliche Maßnahme gegen die Auswirkung von Phasensprüngen auf die Zeitinterpolation bei der Kanalschätzung; und

Fig. 11     einen Graphen, der den Phasenversatz zur Symbolsequenz bei der Phasensprungakkumulation von Fig. 10 zeigt.

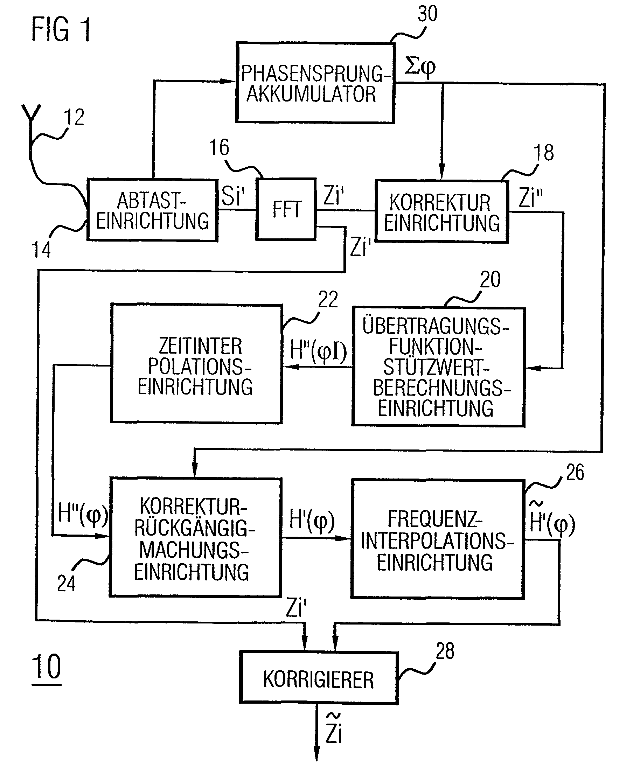

Fig. 1 zeigt ein Blockdiagramm eines Empfängers gemäß einem Ausführungsbeispiel der vorliegenden Erfindung. Der Empfänger, der allgemein mit 10 angezeigt ist, umfaßt eine Antenne 12, eine Abtasteinrichtung 14, deren Eingang mit der Antenne 12 verbunden ist, eine Transformationseinrichtung 16, deren Eingang mit einem Ausgang der Abtasteinrichtung 14 verbunden ist, eine Korrektureinrichtung 18, deren Eingang mit einem Ausgang der Transformationseinrichtung 16 verbunden ist, eine Einrichtung zur Berechnung von Übertragungsfunktionsstützwerten 20, deren Eingang mit einem Ausgang der Korrektureinrichtung 18 verbunden ist, eine Zeitinterpolationseinrichtung, deren Eingang mit einem Ausgang der Einrichtung 20 verbunden ist, eine Korrekturrückgängigmachungseinrichtung 24, deren Eingang mit einem Ausgang der Zeitinterpolationseinrichtung 22 verbunden ist, eine Frequenzinterpolationseinrichtung 26, deren Eingang mit einem Ausgang der Korrekturrückgängigmachungseinrichtung 24 verbunden ist, einen Korrigierer 28, dessen einer Eingang mit dem Ausgang der Transformationseinrichtung 16 und dessen anderer Ausgang mit einem Ausgang der Frequenzinterpolationseinrichtung 26 verbunden ist, sowie einen Phasensprungakkumulator 30, dessen Eingang mit einem weiteren Ausgang der Abtasteinrichtung 14 und einem Steuereingang der Korrektureinrichtung 18 und einem Steuereingang der Korrekturrückgängigmachungseinrichtung 24 verbunden ist, wobei der Ausgang des Empfängers 10 dem Ausgang des Korrigierers 28 entspricht.

Nachdem im vorhergehenden der Aufbau des Empfängers 10 beschrieben worden ist, wird im folgenden dessen Funktionsweise beschrieben.

Die Abtasteinrichtung 14 empfängt über die Antenne 12 und einen Mischer, der zwischen Antenne 12 und Abtasteinrichtung 14 geschaltet und in Fig. 1 aus Übersichtlichkeitsgründen nicht gezeigt ist, ein demoduliertes komplexes Zeitsignal s(t), in welchem mit einer Wiederholrate $f_W$ aufeinanderfolgende Symbole enthalten sind. Die Abtasteinrichtung 14 umfaßt beispielsweise einen A/D-Wandler, und derselben ist eine interne Abtastrate $T_s$ zugewiesen, die die Abtastzeitpunkte $t_i$ festlegt, bei denen die Abtasteinrichtung 14 das empfangene Signal s(t) abtasten kann.

Die Abtasteinrichtung 14 bestimmt aus dem empfangenen Signal die Wiederholrate $f_W$, mit der die Symbole sendeseitig abgestrahlt worden sind über beispielsweise eine Autokorrelation des Empfangssignals, wobei die Abtasteinrichtung 14 hierbei von der periodischen Wiederholung des Symbols innerhalb des Guardintervalls zeitlich vor dem Symbol Gebrauch macht. Aus der so gewonnenen zeitlich gemittelten Wiederholrate $f_W$ der Symbole bestimmt die Abtasteinrichtung 14 optimale Abtastzeitpunkte der Symbole bzw. Startzeitpunkte zur Abtastung der Blöcke von Abtastwerten, wie es bezugnehmend auf Fig. 9 bereits beschrieben wurde und durch die Übergänge von nicht ausgefüllten Guardintervallrechtekken zu Symbolrechtecken dargestellt ist. Aufgrund der Tatsache, daß die interne Abtastrate der Abtasteinrichtung 14 Schwankungen unterworfen ist und nicht von der Sollabtastrate abweicht, die dem Kehrbruch aus der Symboldauer T geteilt durch die Anzahl von Unterträgern N entspricht, und aufgrund anderer Umstände, wie z.B. die Umverlegung des optimalen Abtastzeitpunktes aufgrund Änderungen der Empfangsbedingungen, kann die Anzahl von Abtastungen zwischen den Abtastungen aufeinanderfolgender Symbole von Symbol zu Symbol um einen oder mehrere Abtastwerte voneinander abweichen, wodurch zwischen dem aus der Abtastrate $f_W$ ermittelten optimalen Abtastzeitpunkt des Symbols und dem Abtastzeitpunkt der Blöcke von Abtastwerten Phasensprünge entstehen, wie sie im vorhergehenden Bezug nehmend auf Fig. 9 beschrieben worden sind. Bestimmt beispielsweise die Abtasteinrichtung 14, daß die Wiederholrate $f_W$ gleich $f_s/(N+1/6)$ beträgt, so tritt etwa bei jedem sechsten Symbol ein Phasensprung auf. Die Abtasteinrichtung 14 zeigt die Phasensprünge dem Phasensprungakkumulator 30 und die Richtung derselben an. Die Abtasteinrichtung 14 gibt ferner den Block von Abtastwerten $s'_i$ an die Transformationseinrichtung 16 aus, die eine schnelle Fourier-Transformation an dem Block durchführt, um einen Block von unkorrigierten Unterträgerwerten $z'_i$ zu erhalten.

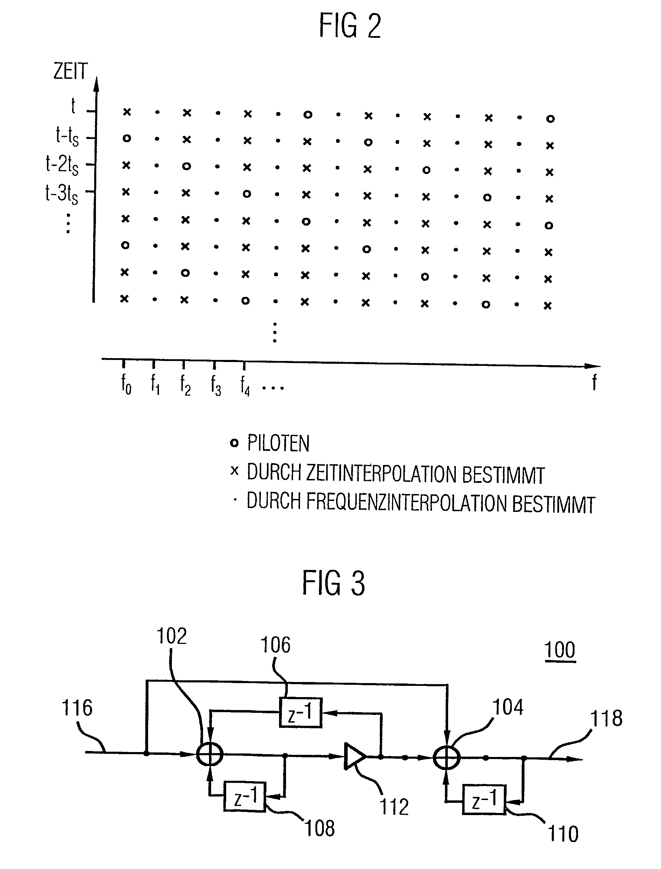

Der Phasensprungakkumulator 30 akkumuliert die von der Abtasteinrichtung 14 erhaltenen Informationen über Phasensprünge, um eine akkumulierte Summe $N_{Phasensprünge}$ der bisher vorgekommenen Phasensprünge zu erhalten. Der Phasensprungakkumulator 30 kann ferner einen Regler aufweisen, um die Summe kontinuierlich betragsmäßig zu verringern, wie es bei dem Ausführungsbeispiel von Fig. 3 der Fall ist. Die Korrektureinrichtung 18 empfängt die Summe $N_{Phasensprünge}$ von dem Phasensprungakkumulator 30 und berechnet aus derselben einen akkumulierten Phasenkorrekturwert $\Sigma\varphi$. Basierend auf diesem Wert verarbeitet die Korrektureinrichtung 18 die komplexen Spektralwerte $z'_i$ von der Transformationseinrichtung 16, um phasenkorrigierte Unterträgerwerte $z''_i$ zu erhalten, und

zwar gemäß der Formel:

$$z''_i = z'_i \cdot e^{j \cdot \Sigma \varphi \cdot i} \qquad \text{(Gl. 6)}$$

wobei

$$\Sigma \varphi = - \frac{2\pi}{N} N_{Phasensprünge} \qquad \text{(Gl. 7)}$$

Die Korrektureinrichtung 18 erzielt hiermit, wie es inhärent aus den Eigenschaften der Fourier-Transformation hervorgeht, virtuell eine zeitliche Verschiebung des Abtastzeitpunktes des Blocks von Abtastwerten $s'_i$ um $N_{Phasensprünge}T_s$. Der Block von Unterträgerwerten $z''_i$, der von der Korrektureinrichtung 18 ausgegeben wird, entspricht folglich virtuell einem Block von Unterträgerwerten, wie er aus dem Empfangssignal ohne Phasensprünge erhalten worden wäre.

Die Übertragungsfunktionsstützwertberechnungseinrichtung 20 empfängt die Unterträgerwerte $z''_i$ von der Korrektureinrichtung 18 und verwendet vorbestimmte Unterträger, um dieselben mit beispielsweise aus einem Protokoll bekannten Unterträgerwerten, sogenannten Piloten, zu vergleichen. Fig. 2 zeigt eine exemplarische Anordnung von Piloten in den Unterträgern der Symbole. Die Unterträger der Symbole sind entlang der Waagrechten, genauer in der Reihenfolge ihrer Frequenzen $f_0$, $f_1$, ... angeordnet, während die Symbole untereinander mit dem aktuellen Symbol zum Zeitpunkt t am weitesten oben und den vorhergehenden Symbolen darunter angeordnet sind. Mit Kreisen sind diejenigen Unterträger I dargestellt, auf welche Piloten aufmoduliert sind. Die mit Punkten oder Kreuzen angezeigten Unterträger werden zur Datenübertragung verwendet, und die auf dieselben aufmodulierten Werte sind dem Empfänger folglich a priori nicht bekannt. Wie es zu erkennen ist, sind die Piloten bei diesem exemplarischen Ausführungsbeispiel auf jeden achten Unterträger aufmoduliert, wobei diese Anordnung bei aufeinanderfolgenden Symbolen um jeweils zwei Unterträger verschoben wird, wodurch nach vier aufeinanderfolgenden Symbolen jeder zweite Unterträger einmal durch einen Piloten abgetastet worden ist.

Die Schätzung der Kanalübertragungsfunktion H(f,t), die sich über die Zeit verändert, erhält die Einrichtung 20, indem dieselbe die phasenkorrigierten Unterträgerwerte $z''_I$ von der Korrektureinrichtung 18 an den Pilotenunterträgern I durch die bekannten Unterträgerwerte $z_I$ der Piloten teilt, d.h. durch Berechnung von

$$\frac{z''_I}{z_I} = H''(f_I(t), t) \qquad \text{(Gl. 8)}$$

Die Einrichtung 20 gibt die berechneten Stützwerte $H''(f_I)$ an den Frequenzen $f_I$ der Unterträger I an die Zeitinterpolationseinrichtung 22 weiter, die bezüglich der Stützpunkte der Übertragungsfunktion über einen Zeitraum einer vorbestimmten Anzahl der letzten Symbole hinweg, die sie über einen gewissen Zeitraum hinweg speichert, eine Zeitinterpolation durchführt. Die Zeitinterpolationseinrichtung 22 führt die Interpolation in Richtung der Zeit durch, wodurch für jeden zweiten Unterträger für jedes Symbol geschätzte Werte für die Kanalübertragungsfunktion an denjenigen Stellen erhalten werden, an denen keine Piloten angeordnet waren, d.h. in Fig. 2 an denjenigen Stellen, die durch ein Kreuz dargestellt sind. Die Interpolation in Zeitrichtung durch die Zeitinterpolationseinrichtung 22 weist Tiefpaßfiltereigenschaften auf, um möglichst viel Rauschen zu unterdrücken aber umgekehrt allen zeitlichen Änderungsraten der Kanalübertragungsfunktion zu folgen. Exemplarische Zeitinterpolationsfilter bzw. Interpolationsalgorithmen umfassen FIR- (Finite-Impulse-Response-) bzw. Finite-Impulsantwort-Filter in Polyphasenimplementierung, die für jeden auszugebenden Wert an einem Unterträgers i zu einem Zeitpunkt t mehrere benachbarte Werte, die durch Piloten berechnet werden konnten, verarbeiten, wobei die Tiefpaßfiltereigenschaften durch die Wahl von Filterkoeffizienten $F_{gh}$ (g,h$\in \mathbb{N}$) erzielt werden. Hierbei wird zur Zeitinterpolation aus einem Vektor von x Pilotenwerten $\{H(f_i,t)\}=\{P_j\}$ (0<j<x) eines Unterträgers i, also aus den mit Kreisen angezeigten Werten eines Unterträgers i entlang einer vertikalen Linie, ein Ausgangsvektor von y (mit y=3*x) angezeigten Zwischenwerten $\{H(fi,t)\}=\{a_l\}$ (0<l<y), also ein Vektor aus den mit Kreuzen angezeigten Werten entlang derselben vertikalen Linie, berechnet, indem folgende Berechnungen durchgeführt werden:

$$a_4 = P_1 F_{11} + P_2 F_{12} + P_3 F_{13}$$
$$a_5 = P_1 F_{21} + P_2 F_{22} + P_3 F_{23} + P_4 F_{24}$$
$$a_6 = P_1 F_{31} + P_2 F_{32} + P_3 F_{33} + P_4 F_{34}$$
$$a_7 = P_2 F_{11} + P_3 F_{12} + P_4 F_{13}$$

$$a_8 = P_2F_{21} + P_3F_{22} + P_4F_{23} + P_5F_{24}$$
$$a_9 = P_2F_{31} + P_3F_{32} + P_4F_{33} + P_5F_{34}$$
$$\vdots$$
$$\vdots$$

Die Schätzung der aktuellen Kanalübertragungsfunktion H"(f) gibt die Zeitinterpolationseinrichtung 22 an die Korrekturrückgängigmachungseinrichtung 24 weiter, welche ebenfalls den akkumulierten Phasensprungsummenwert $N_{Phasensprünge}$ von dem Phasensprungakkumulator 30 empfängt. Die Korrekturrückgängigmachungseinrichtung 24 berechnet aus $N_{Phasensprünge}$ den akkumulierten Phasenkorrekturwert $\Sigma\phi$, um die Phasendrehung, die von der Korrektureinrichtung 18 an den unkorrigierten Unterträgerwerten vor der Zeitinterpolation durchgeführt worden ist, wieder rückgängig zu machen, um aus der Schätzung H" für die Kanalinterpolation eine Schätzung H' für die Kanalübertragungsfunktion zu erhalten, die die Abweichung der unkorrigierten Unterträgerwerte $z'_i$ von den sendeseitig aufmodulierten Unterträgerwerten $z_i$ beschreibt. Anders ausgedrückt gilt für H' und H":

$$z_i' = z_i H'(f_i) + n$$
$$z''_i = z_i H''(f_i) + n \qquad\qquad (Gl.\ 9)$$

wobei n weißes Rauschen anzeigt, welches Kanalstörungen berücksichtigt. Die Korrekturrückgängigmachungseinrichtung 24 berechnet folglich H' aus H" durch:

$$H'(f_i) = H''(f_i)e^{-j\cdot\Sigma\phi\cdot i} \qquad\qquad (Gl.\ 10)$$

Die geschätzte Kanalübertragungsfunktion H' (f) von der Korrekturrückgängigmachungseinrichtung 24 wird durch die Frequenzinterpolationseinrichtung 26 einer Frequenzinterpolation unterzogen, die eine Tiefpaßfiltereigenschaft aufweist, um hierdurch auch die mit Punkten angezeigten Unterträgerwerte zu erhalten. Insbesondere wird somit eine vollständige Schätzung der Kanalübertragungsfunktion zum augenblicklichen Zeitpunkt erhalten, d.h. H"($f_i$, t), und d.h. für sowohl die Unterträger der Piloten als auch die zur Übertragung der Daten verwendeten Unterträger. Durch die Tiefpaßfiltereigenschaft werden unerwünschte Störungen bei der Schätzung der Kanalübertragungsfunktion H' unterdrückt. Exemplarische Filter für die Frequenzinterpolation umfassen ebenfalls FIR-Filter, wie sie bezugnehmend auf die Zeitinterpolation erläutert wurden. Die so erhaltene tiefpaßgefilterte geschätzte Kanalübertragungsfunktion $\tilde{H}$'(f) wird an den Korrigierer 28 weitergeleitet. Der Korrigierer 28 ermittelt aus den unkorrigierten Unterträgerwerten $z'_i$ und der tiefpaßgefilterten geschätzten Kanalübertragungsfunktion $\tilde{H}$'(f) korrigierte Unterträgerwerte $\tilde{z}'_i$, indem dieselbe die unkorrigierten Unterträgerwerte durch die tiefpaßgefilterte geschätzte Kanalübertragungsfunktion $\tilde{H}$' teilt:

$$\tilde{z}'_i = z'_i \cdot \frac{1}{\tilde{\tilde{H}}(f_i)}$$

Nachdem im vorhergehenden die Funktionsweise des Empfängers von Fig. 10 beschrieben worden ist, wird im folgenden näher die Wirkweise der Kanalschätzung beschrieben, die vornehmlich durch den Phasenakkumulator 30, die Korrektureinrichtung 18, die Übertragungsfunktionsstützwertberechnungseinrichtung 20, die Zeitinterpolationseinrichtung 22, die Korrekturrückgängigmachungseinrichtung 24 und die Frequenzinterpolationseinrichtung 26 durchgeführt wird. Wie es im vorhergehenden beschrieben worden ist, wird die Kanalübertragungsfunktion, die die unkorrigierten Unterträgerwerte $z'_i$ mit den sendeseitig auf die Unterträger aufmodulierten Unterträgerwerten $z_i$ verknüpft, mit H' bezeichnet, während die Kanalübertragungsfunktion, die die phasenkorrigierten Unterträgerwerte $z''_i$ mit den sendeseitig auf die Unterträger aufmodulierten Unterträgerwerte $z_i$ verknüpft, mit H" bezeichnet wird. Die zeitliche Variation der Kanalübertragungsfunktion H' ist aufgrund der Phasensprünge bei der Abtastung durch die Abtasteinrichtung 14 plötzlichen Phasensprüngen unterworfen, wohingegen die Kanalübertragungsfunktion H" aufgrund der durch den Phasenakkumulator 30 bewirkten Phasenkorrektur bzw. virtuell bewirkten Phasensprungkompensation nur solchen kontinuierlichen zeitlichen Veränderungen unterworfen ist, wie sie auf natürliche Weise durch Änderung der Mehrwegpfade, wie z.B. durch Bewegung des Empfängers, entstehen. Die plötzlichen Änderungen der Kanalübertragungsfunktion H' würden bei einer Zeitinterpolation der Kanalübertragungsfunktion bei der Kanalschätzung aufgrund der Tiefpaßfiltereigenschaften der Zeitinterpolation zu inakzeptablen Fehlern der Kanalschätzung führen. Die Zeitinterpolation wird deshalb durch die Zeitinterpolationseinrichtung 22 an Stützwerten durchgeführt, die die Übertragungsfunktionsstützwertberechnungseinrichtung 20 aus den phasenkorrigierten Unterträgerwerten $z''_1$ erhält, die eine Abtastung simulieren, bei der keine Phasensprünge in der Abtastung stattfinden.

Andererseits wächst mit der Zeit der durch den Phasensprungakkumulator 30 akkumulierte Phasenkorrekturwert $\Sigma\varphi$, was wiederum auf die Dauer zu einer frequenzmäßigen Erhöhung der Frequenzanteile der Übertragungsfunktion H" führt. Der Grund hierfür besteht darin, daß die durch die Korrektureinrichtung 18 eingeführte Phasenkorrektur einer Verschiebung des Zeitsignals s' (t) um $N_{Phasensprünge}T_s$ entspricht. Hierdurch verschiebt sich die Impulsantwort h(t), die das Empfangssignal mit dem gesendeten Symbol s(t) verknüpft, um denselben Zeitwert. Da die Impulsantwort jedoch das Spektrum der Übertragungsfunktion H(f) ist, wird mit zunehmender Verschiebung der Impulsantwort bzw. mit zunehmender Dezentralisierung das Frequenzspektrum der Übertragungsfunktion H" zu höheren Frequenzen hin verschoben. Ein reellwertiges Filter zur Durchführung der Frequenzinterpolation in der Kanalschätzung müßte deshalb zunehmend breitbandiger werden, und würde deshalb kaum Störungen unterdrücken. Um ein komplexes Filter einerseits und Störungen andererseits zu vermeiden, wird bei der Kanalschätzung des Empfängers deshalb die Frequenzinterpolation bei der Kanalschätzung bezüglich der unkorrigierten Unterträgerwerte durchgeführt. Hierzu wird die geschätzte interpolierte Kanalübertragungsfunktion H" derselben Phasendrehung wie bei der Korrektureinrichtung 18 jedoch in umgekehrter Richtung unterzogen. Da die unkorrigierten Unterträgerwerte einer Abtastung des Symbols entsprechen, die von den anhand der empfangsseitig ermittelten Wiederholrate $f_W$ bestimmten optimalen Abtastzeitpunkten um höchstens $T_s$ abweichen, befindet sich das Spektrum der Übertragungsfunktion H' immer in demselben Bereich, und die Grenzfrequenz bei der Frequenzinterpolation durch die Frequenzinterpolationseinrichtung 26 kann auf einen festen Wert, nämlich die maximal erlaubte Echolaufzeit bzw. Pfadlaufzeitverzögerung der Übertragungsstrecke $T_{max}$, die im wesentlichen der Guardintervall-Länge entspricht, eingestellt werden, um das gesamte Spektrum der Kanalübertragungsfunktion H' durchzulassen. Der Aufwand zum Vorsehen eines komplexen Filters zur Frequenzinterpolation und der Bereitstellung eines hochgenauen Taktes zur Abtastung ist deshalb wirksam vermieden.

Nachdem im vorhergehenden der Aufbau, die Funktionsweise und die Vorteile des Empfängers 10 von Fig. 1 beschrieben worden sind, wird im folgenden ein Ausführungsbeispiel für einen Phasensprungakkumulator 30 Bezug nehmend auf Fig. 3 und 4 beschrieben.

Der Phasensprungakkumulator von Fig. 3, der allgemein mit 100 angezeigt ist, umfaßt zwei Summierer 102 und 104, drei Verzögerungen 106, 108 und 110, die eine Verzögerung eines Wertes um einen Symbolzyklus bewirken, sowie zwei Multiplizierer 112 und 114. Der Addierer 102 besitzt drei Eingänge, zwei nicht-invertierende Eingänge, von denen der eine mit dem Eingang des Phasensprungakkumulators 116 und der andere mit einem Ausgang der Verzögerung 108 verbunden ist, und einen invertierenden Eingang, der mit einem Ausgang der Verzögerung 106 verbunden ist. Ein Ausgang des Summierers 102 ist mit einem Eingang des Verstärkers 112 und einem Eingang der Verzögerung 108 verbunden. Ein Ausgang des Multiplizierers 112 ist mit einem Eingang der Verzögerung 106 verbunden sowie mit einem Eingang des Multiplizierers 114 und einen nicht-invertierenden Eingang des Summierers 104. Der Summierer 104 umfaßt zwei weitere Eingänge, einen nicht-invertierenden Eingang, der mit einem Ausgang der Verzögerung 110 verbunden ist, sowie einen invertierenden Eingang, der mit dem Eingang 116 des Phasensprungakkumulators 100 verbunden ist. Ein Ausgang des Summierers 104 ist mit einem Eingang der Verzögerung 110 sowie mit einem Ausgang 118 des Phasensprungakkumulators 100 verbunden. Der Ausgang des Multiplizierers 114 ist mit einem weiteren Ausgang 120 des Phasensprungakkumulators 100 verbunden.

Nachdem der Aufbau des Phasensprungakkumulators 30 beschrieben worden ist, wird im folgenden dessen Funktionsweise beschrieben.

An dem Eingang 116 kommt in aufeinanderfolgenden Symbolzyklen eine Information darüber an, ob ein Phasensprung in dem aktuellen Symbol vorliegt, und falls dies der Fall ist, in welcher Richtung. In dem Fall, daß kein Phasensprung vorliegt, beträgt der Eingangswert an dem Eingang 116 Null, während der Wert in den anderen Fällen $N_{Sprung}$, die Sprungdistanz, $(N_{Sprung} \in I\!N )$ oder - $N_{Sprung}$ beträgt.

Durch den Summierer 14 wird die eigentliche Phasenakkumulation durchgeführt, d.h. der aktuelle Phasensprung wird von einem aktuellen Summenergebnis, das am Ausgang des Summierers 104 beim vorhergehenden Symbolzyklus ausgegeben und durch die Verzögerung 110 um einen Symbolzyklus verzögert nun am nicht-invertierenden Eingang des Summierers 104 anliegt, subtrahiert. Am Ausgang des Summierers 104 liegt folglich eine negative Summe aller bisher vorgekommenen Phasensprünge an.

Der restliche Teil des Phasensprungakkumulators 30, der aus dem Summierer 102, den Verzögerungen 106 und 108 und dem Verstärker 112 besteht, bildet einen Regler zur Vermeidung einer unaufhaltsamen Akkumulation der Summe an dem Summierer 104. Dieser Regler gibt an dem Ausgang des Multiplizierers 112 an den übrigen nicht-invertierenden Eingang des Summierers 104 einen Wert aus, der zu dem aktuellen Abtastratenversatz, d.h. der Differenz aus interner Abtastrate der Abtasteinrichtung 14 und der Sollabtastrate, die der Wiederholrate $f_W$ mal der Anzahl der Unterträger N entspricht, proportional um eine Konstante.

Der an dem Ausgang des Multiplizierers 112 ausgegebene Regelwert wird auf folgende Weise erhalten. Der Eingangswert 116 wird durch den Summierer 102 und die Verzögerung 108 ständig aufsummiert. Das Ergebnis der Summe des Summierers 102 wird betragsmäßig durch den Multiplizierer 112 und die Verzögerung 106 um einen Wert verringert, der proportional zum aktuellen Summeergebnis ist. Der Faktor, um den am Multiplizierer 112 die aktuelle Summe multipliziert wird, wird nach dem Einschalten des Empfängers zunächst eingeregelt, um sich schließlich auf einen recht kleinen Wert einzuregeln. Wie es zu erkennen ist, verringert sich der Regelwert bei Ausbleiben eines Phasensprunges in aufeinanderfolgenden Symbolzyklen exponentiell. Um diesen Regelwert wird das Summenergebnis des Summierers 104 reduziert. Bei Zunahme des Betrags des Summenergebnisses an den Summierer 104 wird folglich auch der Regelwert, der der Summe an dem Summierer 104 entgegenwirkt, größer. Bei gleichbleibender Abtastratenabweichung der Abtasteinrichtung 14 regelt der Regler den Ausgangswert an dem Ausgang 118 des Phasensprungakkumulators auf einen festen Bereich ein. Der Ausgangswert des Phasenakkumulators 100 wird anschließend noch mit dem Wert von $2\pi/N$ multipliziert, um den in Fig. 1 erläuterten akkumulierten Phasenkorrekturwert $\Sigma\varphi$ zu erhalten, wobei dies in Fig. 3 jedoch nicht gezeigt ist. Ist der Regelwert am Ausgang des Multiplizierers 112 ungleich 0, so führt dies zu einem sich stetig ändernden Phasenkorrekturwert am Ausgang 118, solange sein Phasensprung am Eingang 116 auftritt. Damit greift die Phasenkorrektur einem Sprung vor und kompensiert somit eine eventuell vorhandene Abtastratenabweichung, bei der regelmäßig Phasensprünge auftreten. Die Sprünge kompensieren ihrerseits dann die langsam aufgebaute Phasenverschiebung. Auf diese Weise werden sowohl die Phasenverschiebung als auch die regelmäßig auftretenden Sprünge, die durch eine Abtastratenabweichung hervorgerufen werden, ausgeglichen.

In Fig. 4 ist zur Veranschaulichung der Funktionsweise des Phasensprungakkumulators 100 von Fig. 3 mit Regler ein exemplarischer Verlauf des tatsächlichen Phasenversatzes zwischen den Abtastwertblockabtastungen und den optimalen Symbolabtastungen $\Delta\varphi$ und des akkumulierten Phasenkorrekturwertes, wie er aus dem Phasensprungakkumulator 100 von Fig. 3 erhalten wird, über die Zeit dargestellt. Wie es zu sehen ist, kann durch die Regelung verhindert werden, daß der akkumulierten Phasenkorrekturwert $\Sigma\varphi$ betragsmäßig unkontrolliert zunimmt, sondern daß er sich auf einen Bereich einpegelt.

Bezug nehmend auf die vorhergehende Beschreibung wird darauf hingewiesen, daß verschiedene Änderungen vorgenommen werden können. Beispielsweise kann die virtuelle Verschiebung des Abtastzeitpunktes des Blocks von Abtastwerten anstatt in der spektralen Darstellung durch die Korrektureinrichtung 18 mittels Phasendrehung auch durch ein zyklisches Rotieren der Eingangswerte $s'_i$ vor der Fourier-Transformation durch die Transformationseinrichtung 16 durchgeführt werden. Dieses zyklische Rotieren würde die Abtastwerte $s'_i$ um so viele Abtastwerte verschieben, wie durch die bisher vorgekommenen Phasensprünge bewirkt wurden, wobei beim zyklischen Rotieren auf einer Seite herausfallende Werte auf der anderen Seite wieder hinzugefügt werden. Aufgrund inhärenter Eigenschaften der Fouriertransformation würde die zyklische Rotation um $N_R$ Abtastwerte dieselbe Auswirkung aufweisen, wie eine Multiplikation der unkorrigierten Unterträgerwerte $z'_i$ mit $e^{j\Sigma\varphi i}$ mit $\Sigma\varphi = -\frac{2\pi}{N}N_R$ .

Die im vorhergehenden als optimal bezeichneten Abtastzeitpunkte, nämlich der Beginn des zuerst ankommenden Symbols am Empfänger, können von Anwendung zu Anwendung verschieden sein, und stellt deshalb lediglich ein exemplarisches Beispiel dar. Ebenso kann die Wiederholrate $f_W$ durch den Empfänger 10 anders bestimmt werden als durch eine Autokorrelation.

Das vorhergehende Ausführungsbeispiel zeigt folglich einen Empfänger für die digitale Übertragung, und kann beispielsweise als digitaler Radioempfänger, Modem oder im Mobilfunk eingesetzt werden, wobei dort mehrere Unterträger im Rahmen eines Mehrträgerverfahrens zur Datenübertragung verwendet werden. Die vorhergehende Beschreibung ist somit auch ohne weiteres auf das DMT-Verfahren anwendbar. Die vor der zeitlichen Interpolation durchgeführte Phasendrehung wird im Anschluß an dieselbe wieder rückgängig gemacht, wodurch das Interpolationsfilter im Zeitbereich unbeeinträchtigt bleibt. Eine durch die Phasendrehung bewirkte Kompensation der Phasensprünge ist im Frequenzbereich ja auch nicht notwendig, da zeitlich aufeinanderfolgende Werte nicht gemeinsam verarbeitet werden. Die Implementierung der Sprungkompensation sowie die Regelung können gegebenenfalls von bereits existierenden Systemen übernommen werden.

Das im vorhergehenden beschriebene Ausführungsbeispiel kann in Empfängern für digitalen Lang-, Mittel- und Kurzwellenrundfunk nach dem Standard von Digital Radio Mondiale (DRM) zur Anwendung kommen. Es handelt sich bei diesem System um eine OFDM-Übertragung. Innerhalb eines 10 kHz breiten Bandes werden hierbei etwa 200 Träger untergebracht. Ein Teil der Träger wird für Piloteninformationen in einem regelmäßigen Raster mit festgelegten Werten moduliert. Der Empfänger extrahiert diese Piloten, wie im vorhergehenden beschrieben, und berechnet die Veränderung durch den Kanal, wie ebenfalls im vorhergehenden beschrieben. Anschließend werden die Kanaleinflüsse auf alle Träger abgeschätzt, um die darin enthaltenen Daten demodulieren zu können.

Der Kanal für Kurzwellenübertragung ist geprägt durch Mehrwegeausbreitung. Dasselbe Signal wird an unterschiedlichen Ionosphärenschichten reflektiert und beim Empfänger überlagert. Die einzelnen Pfade ändern ihre Intensität mit der Zeit. Sie können verschwinden und neu hinzukommen. Hierbei ändert sich der optimale Zeitpunkt der Symbolextraktion sprunghaft, und es können, wie im vorhergehenden beschrieben, auch Phasensprünge um mehr als einen Abtastwert der Abtastwertblockabtastung zum optimalen Abtastzeitpunkt auftreten. Werden im Empfänger preiswerte A/D-Wandler eingesetzt, so ist bereits mit einer Abweichung der Abtastrate von etwa 100 bis 200 ppm (parts per million) und somit bereits aus diesem Grund mit Phasensprüngen zu rechnen. Damit ist eine regelmäßige Anpassung der Symbolposition auch bei idealen Verhältnissen notwendig, wobei sich die hierdurch bewirkten Phasensprünge bei dem im vorhergehenden beschriebenen Ausführungsbeispiel nicht nachteilig auf die Kanalschätzung auswirken.

Die Veränderung der Phasen durch die Symbolpositionierung muß kompensiert werden, da eine Kanalschätzung später im Empfänger vorgenommen wird, die eine zeitliche Interpolation enthält. Dazu werden bei dem oben beschriebenen Ausführungsbeispiel die Änderungen der Symbolposition erfaßt, zu einer Korrekturphase verarbeitet und auf das Symbol angewendet. Diese Phasenkompensation wirkt sich aber nachteilig auf die Frequenzinterpolation aus, weshalb bei dem im vorhergehenden beschriebenen Ausführungsbeispiel daher die Phasenverschiebung, die vor der Zeitinterpolation vorgenommen wird, noch vor der Frequenzinterpolation wieder rückgängig gemacht wird.

Der im vorhergehenden beschriebene Empfänger stellt folglich einen Empfänger für Multitragerübertragung mit Kanalschätzung dar, der eine Kompensation von Phasensprüngen mit sich an die zeitliche Interpolation anschließender Zurücknahme der durch die Phasenkompensation eingebrachten Signalveränderung aufweist, wodurch die Voraussetzungen für die nachfolgende Interpolation und Frequenzrichtung verbessert werden.

Bezugnehmend auf die vorhergehende Beschreibung wird darauf hingewiesen, daß sich dieselbe lediglich zur besseren Verständlichkeit auf ein spezielles Mehrträgersystem, nämlich, OFDM bezog, daß die vorliegende Erfindung aber auch auf andere Mehrträgersysteme anwendbar ist, wie DMT oder dergleichen. Dementsprechend kann die Modulationstransformation eine andere sein als die IFFT, z.B. eine Wavelet-Transformation.

Abschließend wird darauf hingewiesen, daß obige Ausführungsbeispiele in Software, Hardware oder einer Kombination derselben implementiert werden können.

**Patentansprüche**

1. Vorrichtung zur Durchführung einer Kanalschätzung eines Kanals, auf dem mit einer Wiederholrate Symbole übertragen werden, die sich spektral aus mehreren Unterträgern zusammensetzen, von denen auf vorbestimmte Unterträger bekannte Unterträgerwerte aufmoduliert sind, **gekennzeichnet durch** folgende Merkmale:

   einer Einrichtung (14) zum Abtasten eines ersten Symbols und eines darauffolgenden zweiten Symbols basierend auf einer ersten internen Abtastrate, um einen ersten Block von Abtastwerten für das erste Symbol und einen zweiten Block von Abtastwerten für das zweite Symbol zu erhalten, wobei der erste Block einen ersten Phasenversatz und der zweite Block einen zweiten Phasenversatz zu der Wiederholrate aufweist;

   einer Einrichtung (18, 30) zum, falls zwischen dem ersten Phasenversatz und dem zweiten Phasenversatz ein Phasensprung in Höhe von etwa einem oder mehreren der internen Abtastrate entsprechenden Abtastintervallen besteht, Kompensieren des Phasensprungs **durch** Verarbeiten der Abtastwerte des zweiten Symbols, derart, daß Phasen der Unterträger des zweiten Symbols um einen mit der Frequenz der Unterträger steigenden Betrag geändert werden, wobei die Steigerung von der zu kompensierenden Phasenänderung abhängt, wodurch phasenkompensierte Unterträgerwerte erhalten werden;

   einer Einrichtung (20) zum Vergleichen der bekannten Unterträgerwerte mit entsprechenden der phasenkompensierten Unterträgerwerte, um Stutzstellenwerte für eine aktuelle geschätzte Übertragungsfunktion zu erhalten;

   einer Einrichtung (22) zum Durchführen einer Interpolation über Stützstellenwerte vorhergehender und der aktuellen geschätzten Übertragungsfunktion, um Interpolationswerte für die aktuelle geschätzte Übertragungsfunktion zu erhalten; und

   einer Einrichtung (24) zum Verändern von Phasen der Stützstellenwerte und Interpolationswerte der aktuell geschätzten Kanalübertragungsfunktion um einen mit der Frequenz der Unterträger steigenden Betrag, wobei die Steigerung dieselbe ist wie bei der Kompensation des Phasensprungs, wobei die Änderung jedoch in umgekehrter Richtung zu der Änderung bei der Kompensation des Phasensprungs stattfindet, um phasenkompensierte Kanalübertragungsfunktionswerte zu erhalten; und

   einer Einrichtung (26) zum Tiefpaßfiltern der Kanalübertragungsfunktionswerte, um eine Kanalschätzung des Kanals zu erhalten.

2. Vorrichtung gemäß Anspruch 1, die ferner folgendes Merkmal aufweist:

eine Einrichtung (14) zum Bestimmen der Wiederholrate.

3. Vorrichtung gemäß Anspruch 1 oder 2, die ferner folgendes Merkmal aufweist:

eine Einrichtung (30) zum Bestimmen der Steigerung bei der Kompensation durch Akkumulieren aller auftretenden Phasensprünge, um einen akkumulierten Wert für die Steigerung zu erhalten.

4. Vorrichtung gemäß Anspruch 3, bei der die Einrichtung zum Bestimmen der Steigerung folgendes Merkmal aufweist:

eine Gegenwirkeinrichtung zum Reduzieren des Betrags des akkumulierten Werts für die Steigerung um einen Bruchteil des akkumulierten Werts bei jedem Symbol.

5. Vorrichtung gemäß einem der Ansprüche 1 bis 4, bei der die Einrichtung zum Kompensieren ferner folgendes Merkmal aufweist:

eine Einrichtung zum zyklischen Rotieren des Blocks von Abtastwerten um eine Anzahl von Abtastintervallen, der die Höhe des Phasensprungs in etwa entspricht, um rotierte Abtastwerte zu erhalten; und

einer Einrichtung zum Transformieren der rotierten Abtastwerte in eine spektrale Darstellung, um die phasenkompensierten Unterträgerwerte zu erhalten.

6. Vorrichtung gemäß einem der Ansprüche 1 bis 4, bei der die Einrichtung zum Kompensieren folgende Merkmale aufweist:

eine Einrichtung (16) zum Transformieren des Blocks von Abtastwerten in eine spektrale Darstellung, um nicht kompensierte Unterträgerwerte zu erhalten; und

eine Einrichtung (18) zum Verändern von Phasen der Unterträgerwerte des zweiten Symbols um einen mit der Frequenz der Unterträger steigenden Betrag, wobei die Steigerung von der zu kompensierenden Phasenänderung abhängt, wodurch die phasenkompensierten Unterträgerwerte erhalten werden.

7. Verfahren zur Durchführung einer Kanalschätzung eines Kanals, auf dem Symbole mit einer Wiederholrate übertragen werden, die sich spektral aus mehreren Unterträgern zusammensetzen, von denen auf vorbestimmte Unterträger bekannte Unterträgerwerte aufmoduliert sind, **gekennzeichnet durch** folgende Schritte:

Abtasten (14) eines ersten Symbols und eines darauffolgenden zweiten Symbols basierend auf einer ersten internen Abtastrate, um einen ersten Block von Abtastwerten für das erste Symbol und einen zweiten Block von Abtastwerten für das zweite Symbol zu erhalten, wobei der erste Block einen ersten Phasenversatz und der zweite Block einen zweiten Phasenversatz zu der Wiederholrate aufweist;

falls zwischen dem ersten Phasenversatz und dem zweiten Phasenversatz ein Phasensprung in Höhe von etwa einem oder mehreren der internen Abtastrate entsprechenden Abtastintervallen besteht, Kompensieren (18, 30) des Phasensprungs **durch** Verarbeiten der Abtastwerte des zweiten Symbols, derart, daß Phasen der Unterträger des zweiten Symbols um einen mit der Frequenz der Unterträger steigenden Betrag geändert werden, wobei die Steigerung von der zu kompensierenden Phasenänderung abhängt, wodurch phasenkompensierte Unterträgerwerte erhalten werden;

Vergleichen (20) der bekannten Unterträgerwerte mit entsprechenden der phasenkompensierten Unterträgerwerte, um Stützstellenwerte fur eine aktuelle geschätzte Übertragungsfunktion zu erhalten;

Durchführen (22) einer Interpolation über Stützstellenwerte vorhergehender und der aktuellen geschätzten Übertragungsfunktion, um Interpolationswerte für die aktuelle geschätzte Übertragungsfunktion zu erhalten; und

Verändern (24) von Phasen der Stützstellenwerte und Interpolationswerte der aktuell geschätzten Kanalübertragungsfunktion um einen mit der Frequenz der Unterträger steigenden Betrag, wobei die Steigerung dieselbe ist wie bei der Kompensation des Phasensprungs, wobei die Änderung jedoch in umgekehrter Richtung zu der Änderung bei der Kompensation des Phasensprungs stattfindet, um phasenkompensierte Kanalübertragungsfunktionswerte zu erhalten; und

Tiefpaßfiltern (26) der Kanalübertragungsfunktionswerte, um eine Kanalschätzung des Kanals zu erhalten.

**Claims**

1. Device for performing a channel estimation of a channel on which symbols are transmitted with a repetition rate which are spectrally composed of several subcarriers from which known subcarrier values are modulated onto predetermined subcarriers, **characterized by**:

   means (14) for sampling a first symbol and a subsequent second symbol based on a first internal sample rate to obtain a first block of sample values for the first symbol and a second block of sample values for the second symbol, wherein the first block comprises a first phase offset and the second block comprises a second phase offset with respect to the repetition rate;

   means (18, 30) for, if there is a phase jump in the order of approximately one or more sample intervals corresponding to the internal sample rate between the first phase offset and the second phase offset, compensating the phase jump by processing the sample values of the second symbol such that phases of the subcarriers of the second symbol are changed by an amount increasing with the frequency of the subcarriers, wherein the increase depends on the phase change to be compensated, whereby phase-compensated subcarrier values are obtained;

   means (20) for comparing the known subcarrier values to corresponding ones of the phase-compensated subcarrier values to obtain supporting position values for a current estimated transfer function;

   means (22) for performing an interpolation on supporting position values of previous and the current estimated transfer functions to obtain interpolation values for the current estimated transfer function; and

   means (24) for changing phases of the supporting position values and interpolation values of the currently estimated channel transfer function by an amount increasing with the frequency of the subcarriers, wherein the increase is the same as in the compensation of the phase jump, wherein, however, the change occurs in inverse direction to the change in the compensation of the phase jump to obtain phase-compensated channel transfer function values; and

   means (26) for low-pass filtering the channel transfer function values to obtain a channel estimation of the channel.

2. Device of claim 1, further comprising:

   means (14) for determining the repetition rate.

3. Device of claim 1 or 2, further comprising:

   means (30) for determining the increase in the compensation by accumulating all occurring phase jumps to obtain an accumulated value for the increase.

4. Device of claim 3, wherein the means for determining the increase comprises:

   counteracting means for reducing the magnitude of the accumulated value for the increase by a fraction of the accumulated value in each symbol.

5. Device according to one of claims 1 to 4, wherein the means for compensating further comprises:

   means for cyclically rotating the block of sample values by a number of sample intervals which the extent of the phase jump approximately corresponds to, to obtain rotated sample values; and

means for transforming the rotated sample values into a spectral representation to obtain the phase-compensated subcarrier values.

6. Device according to one of claims 1 to 4, wherein the means for compensating comprises:

means (16) for transforming the block of sample values into a spectral representation to obtain non-compensated subcarrier values; and

means (18) for changing phases of the subcarrier values of the second symbol by an amount increasing with the frequency of the subcarriers, wherein the increase depends on the phase change to be compensated, whereby the phase-compensated subcarrier values are obtained.

7. Method for performing a channel estimation of a channel on which symbols are transmitted with a repetition rate which are spectrally composed of several subcarriers from which known subcarrier values are modulated onto predetermined subcarriers, **characterized by**:

sampling (14) a first symbol and a subsequent second symbol based on a first internal sample rate to obtain a first block of sample values for the first symbol and a second block of sample values for the second symbol, wherein the first block comprises a first phase offset and the second block comprises a second phase offset with respect to the repetition rate;

if there is a phase jump in the order of approximately one or more sample intervals corresponding to the internal sample rate between the first phase offset and the second phase offset, compensating (18, 30) the phase jump by processing the sample values of the second symbol such that phases of the subcarriers of the second symbol are changed by an amount increasing with the frequency of the subcarriers, wherein the increase depends on the phase change to be compensated, whereby phase-compensated subcarrier values are obtained;

comparing (20) the known subcarrier values to corresponding ones of the phase-compensated subcarrier values to obtain supporting position values or a current estimated transfer function;

performing (22) an interpolation on supporting position values of previous and the current estimated transfer functions to obtain interpolation values for the current estimated transfer function; and

changing (24) phases of the supporting position values and interpolation values of the currently estimated channel transfer function by an amount increasing with the frequency of the subcarriers, wherein the increase is the same as in the compensation of the phase jump, wherein, however, the change occurs in inverse direction to the change in the compensation of the phase jump to obtain phase-compensated channel transfer function values; and

low-pass filtering (26) the channel transfer function values to obtain a channel estimation of the channel.

**Revendications**

1. Dispositif pour réaliser une estimation d'un canal sur lequel sont transmis des symboles à un taux de répétition qui se composent spectralement de plusieurs sous-porteuses dont des valeurs de sous-porteuse connues sont modulées sur des sous-porteuses prédéterminées, **caractérisé par** les caractéristiques suivantes :

un dispositif (14) destiné à balayer un premier symbole et un deuxième symbole successif sur base d'un premier taux de balayage interne, pour obtenir un premier bloc de valeurs de balayage pour le premier symbole et un deuxième bloc de valeurs de balayage pour le deuxième symbole, le premier bloc présentant un premier décalage de phase et le deuxième bloc présentant un deuxième décalage de phase par rapport au taux de répétition ;

un dispositif (18, 30) destiné à compenser, s'il existe entre le premier décalage de phase et le deuxième décalage de phase un changement de phase de l'ordre d'environ un ou plusieurs intervalles correspondant au taux de balayage interne, le changement de phase en traitant le taux de balayage du deuxième symbole de sorte que des phases des sous-porteuses du deuxième symbole soient changées d'une valeur croissant avec la fréquence des sous-porteuses, l'augmentation étant fonction du changement de phase à compenser, d'où il est obtenu des valeurs de sous-porteuse compensées en phase ;

un dispositif (20) destiné à comparer les valeurs de sous-porteuse connues avec des valeurs de sous-porteuse compensées en phase correspondantes, pour obtenir des valeurs de support pour une fonction de transmission estimée actuelle ;

un dispositif (22) destiné à réaliser une interpolation sur des valeurs de support de la fonction de transmission précédente et de la fonction de transmission estimée actuelle, pour obtenir des valeurs d'interpolation pour la fonction de transmission estimée actuelle ; et

un dispositif (24) destiné à changer les phases des valeurs de points de support et des valeurs d'interpolation de la fonction de transmission de canal estimée actuelle d'une valeur croissant avec la fréquence des sous-porteuses, l'augmentation étant identique à celle lors de la compensation du changement de phase, le changement ayant toutefois lieu en sens inverse au changement lors de la compensation du changement de phase, pour obtenir des valeurs de fonction de transmission de canal compensées en phase ; et

un dispositif (26) destiné à filtrer passe-bas les valeurs de fonction de transmission de canal, pour obtenir une estimation du canal.

2. Dispositif selon la revendication 1, présentant, par ailleurs, la caractéristique suivante :

un dispositif (14) destiné à déterminer le taux de répétition.

3. Dispositif selon la revendication 1 ou 2, présentant, par ailleurs, la caractéristique suivante :

un dispositif (30) destiné à déterminer l'augmentation lors de la compensation par accumulation de tous les changements de phase qui se produisent, pour obtenir une valeur accumulée pour l'augmentation.

4. Dispositif selon la revendication 3, dans lequel le dispositif destiné à déterminer l'augmentation présente la caractéristique suivante :

un dispositif de réaction destiné à réduire la quantité de la valeur accumulée pour l'augmentation d'une fraction de la valeur accumulée à chaque symbole.

5. Dispositif selon l'une des revendications 1 à 4, dans lequel le dispositif pour compenser présente, par ailleurs, la caractéristique suivante :

un dispositif destiné à effectuer une rotation cyclique du bloc de valeurs de balayage d'un certain nombre d'intervalles de balayage correspondant environ à la hauteur du changement de phase, pour obtenir des valeurs de balayage tournées ; et

un dispositif destiné à transformer les valeurs de balayage tournées en une représentation spectrale, pour obtenir les valeurs de sous-porteuse compensées en phase.

6. Dispositif selon l'une des revendications 1 à 4, dans lequel le dispositif pour compenser présente les caractéristiques suivantes :

un dispositif (16) destiné à transformer le bloc de valeurs de balayage en une représentation spectrale, pour obtenir des valeurs de sous-porteuse non compensées ; et

un dispositif (18) destiné à changer des phases des valeurs de sous-porteuse du deuxième symbole d'une quantité augmentant avec la fréquence des sous-porteuses, l'augmentation étant fonction du changement de phase à compenser, d'où il est obtenu les valeurs de sous-porteuse compensées en phase.

7. Procédé pour réaliser une estimation d'un canal sur lequel sont transmis des symboles à un taux de répétition qui se composent spectralement de plusieurs sous-porteuses dont des valeurs de sous-porteuse connues sont modulées sur des sous-porteuses prédéterminées, **caractérisé par** les étapes suivantes :

balayer (14) un premier symbole et un deuxième symbole successif sur base d'un premier taux de balayage interne, pour obtenir un premier bloc de valeurs de balayage pour le premier symbole et un deuxième bloc de valeurs de balayage pour le deuxième symbole, le premier bloc présentant un premier décalage de phase et le deuxième bloc un deuxième décalage de phase par rapport au taux de répétition ;

s'il existe entre le premier décalage de phase et le deuxième décalage de phase un changement de phase de l'ordre d'environ un ou plusieurs intervalles correspondant au taux de balayage interne, compenser (18, 30) le changement de phase en traitant les valeurs de balayage du deuxième symbole, de sorte que les phases des sous-porteuses du deuxième symbole soient changées d'une quantité augmentant avec la fréquence des sous-porteuses, d'où l'augmentation est fonction du changement de phase à compenser, d'où il est obtenu des valeurs de sous-porteuse compensées en phase ;

comparer (20) les valeurs de sous-porteuse connues avec des valeurs de sous-porteuse compensées en phase correspondantes, pour obtenir des valeurs de point de support pour une fonction de transmission estimée actuelle ;

réaliser (22) une interpolation sur des valeurs de point support de la fonction de transmission précédente et de la fonction de transmission estimée actuelle, pour obtenir des valeurs d'interpolation pour la fonction de transmission estimée actuelle ; et

changer (24) les phases des valeurs de points de support et des valeurs d'interpolation de la fonction de transmission de canal estimée actuelle d'une valeur croissant avec la fréquence des sous-porteuses, l'augmentation étant identique à celle lors de la compensation du changement de phase, le changement ayant toutefois lieu en sens inverse au changement lors de la compensation du changement de phase, pour obtenir des valeurs de fonction de transmission de canal compensées en phase ; et

filtrer passe-bas (26) les valeurs de fonction de transmission de canal, pour obtenir une estimation du canal.

# FIG 1

# FIG 2

ZEIT

○ PILOTEN

× DURCH ZEITINTERPOLATION BESTIMMT

· DURCH FREQUENZINTERPOLATION BESTIMMT

# FIG 3

FIG 4

PHASENVERSATZ ZUR SYMBOLSEQUENZ

$\Sigma y$
$\Delta \varphi$

t

FIG 5

908

902

910

906

900

904

912

IFFT

FFT

FIG 6

913

-Tg    0    T    t

GUARD-INTERVALL    SYMBOL

FIG 7

920

922  924  926  928

Y

| ABTAST-EINRICHTUNG | Si' | FFT | Zi' | KANALSCHATZUNG |

Ho'(Zi)

Zi' → KORREKTUR-EINRICHTUNG → $\tilde{Z}i'$

930

FIG 8

950
SYMBOL

952
FFT

954
UNTERTRÄGER/PILOTEN

956
VERGLEICH

$H(f,t)$

958

t

960

f

FIG 9

## FIG 10

## FIG 11